# EUROPEAN PATENT SPECIFICATION

(11) **EP 3 234 354 B1**
(45) Date of publication and mention of the grant of the patent: **06.05.2020**
(21) Application number: 15828335.8
(22) Date of filing: 16.12.2015
(51) Int. Cl.: F03G 7/06, F02G 5/04

(54) **HEAT TRANSFER IN AN ENERGY RECOVERY DEVICE**
WÄRMEÜBERTRAGUNG IN EINER ENERGIERÜCKGEWINNUNGSVORRICHTUNG
TRANSFERT DE CHALEUR DANS UN DISPOSITIF DE RÉCUPÉRATION D'ÉNERGIE

(30) Priority: 16.12.2014 GB 201422402
(43) Date of publication of application: 25.10.2017
(73) Proprietor: Exergyn Ltd., Dublin 11 (IE)
(72) Inventor: TIRCA-DRAGOMIRESCU, Georgiana, Dublin 11 (IE); O'TOOLE, Kevin, Dublin 11 (IE); CULLEN, Barry, Dublin 11 (IE); KELLY, Robert, Dublin 11 (IE); BEIRNE, Rory, Dublin 11 (IE)
(74) Representative: Purdylucey Intellectual Property
(86) International application number: PCT/EP2015/080114
(87) International publication number: WO 2016/097070

(56) References cited:
- WO-A2-2015/181388
- GB-A- 2 497 542
- US-A- 4 257 231
- US-A- 4 306 415
- US-A- 4 563 876
- US-A- 5 821 664
- US-A1- 2011 120 113
- US-B1- 6 226 992

## Description

### Field

The present application relates to the field of energy recovery and in particular to the use of shape memory alloys (SMA) or Negative Thermal Expansion (NTE) materials for same.

### Background

Low grade heat, which is typically considered less than 100 degrees, represents a significant waste energy stream in industrial processes, power generation and transport applications. Recovery and re-use of such waste streams is desirable. An example of a technology which has been proposed for this purpose is a Thermoelectric Generator (TEG). Unfortunately, TEGs are relatively expensive. Another largely experimental approach that has been proposed to recover such energy is the use of Shape Memory Alloys.

A Shape Memory alloy (SMA) is an alloy that "remembers" its original, cold-forged shape which once deformed returns to its pre-deformed shape upon heating. This material is a lightweight, solid-state alternative to conventional actuators such as hydraulic, pneumatic, and motor-based systems.

A heat engine concept is under development which utilises Shape Memory Alloy (SMA) or another Negative Thermal Expansion (NTE) material as the working medium. In such an engine, for example as disclosed in PCT Patent Publication number WO2013/087490 and assigned to the assignee of the present invention, the forceful contraction of such material on exposure to a heat source is captured and converted to usable mechanical work. Other examples of prior art include US6,226,992; US2011/120113: US4,257,231; US4,563;876; US4,306,415 and WO2015/181388.

Thus far, a useful material for such a working mass has been found to be NickelTitanium alloy (NiTi). This alloy is a well-known Shape Memory Alloy and has numerous uses across different industries.

For example, a plurality of NiTi wires form the working element of the engine. Force is generated through the contraction and expansion of these elements by application of a hot and cold fluid within the working core, via a piston and crank mechanism. A problem to be solved is that it is desirable to improve the heat transfer from the fluid to each wire element in the working core to ensure the engine works as efficiently as possible.

It is therefore an object of the invention to provide a device and method to overcome the above mentioned problem.

### Summary

According to the invention there is provided an energy recovery device as set out in the appended claims.

Shape Memory Alloy or other Negative Thermal Expansion (NTE) Material, fixed at one end and free to move at a second end, such that the wires are arranged adjacently and are in friction or interference contact with each other or with a spacing element, positioned so that the wires are kept slightly removed from each other for the purposes of enhancing heat transfer performance of the fluid/wire system. The grouped elements (wires and spacers) are secured, in aggregate at the outer perimeter of wires utilising a suitable bracket. In such arrangement, during the operation of the bundle arrangement in a heat engine system, the plate elements act to transmit the aggregated force generation of the wire grouping and thus usefully recover and transmit power.

A spacer element is positioned to urge the elements away from each other to form said gap.

A bracket system is configured to maximise the heat transfer surface area of the elements when a fluid is flowing over the elements.

In one embodiment the diameter of at least one NTE or SMA element is reduced relative to either or both ends to optimise heat transfer between the fluid and element.

In one embodiment there is provided a U-shaped separator.

In one embodiment at least one or more of the NTE or SMA element ends are coated with a resin or plastic to maintain a gap towards each center.

In one embodiment there is provided a tapered lock mechanism in the shape of a cone adapted to friction lock the elements at one end.

In another embodiment there is provided a core for use in an energy recovery device comprising a grouping of wire elements, composed of Shape Memory Alloy or other Negative Thermal Expansion (NTE) Material, fixed at one end and free to move at a second end, such that the wires are arranged adjacently and are in friction or interference contact with each other, positioned so that the wires are kept removed from each other to increase heat transfer surface when a fluid is passed over said wires.

In one embodiment a spacer element is positioned to urge the elements away from each other to form a gap between adjacent elements.

In one embodiment a bracket system is configured to maximise the heat transfer surface area of the elements when a fluid is flowing over the elements. In one embodiment the diameter of at least one NTE or SMA element is reduced relative to either or both ends to optimise heat transfer between the fluid and element.

In one embodiment the core comprises a U-shaped separator.

In one embodiment at least one or more of the NTE or SMA element ends are coated with a resin or plastic to maintain a gap towards each center.

In one embodiment the core is dimensioned to allow fluid flow through the centre of the engine in operation.

### Brief Description of the Drawings

The invention will be more clearly understood from the following description of an embodiment thereof, given by way of example only, with reference to the accompanying drawings, in which:-
Figure 1 illustrates a prior art energy recovery system using SMA or NTE materials;
Figure 2 illustrates an embodiment of a core in operation with a plurality of SMA or NTE elements;
Figure 3 illustrates a schematic representation of the bundle holder;
Figure 4 illustrates a schematic drawing of the bundle holder using a wedging technique to fix SMA wires;
Figure 5 illustrates a snapshot of the fluid circulation in between wedged wires;
Figure 6 illustrates flow paths in between the rows of SMA;
Figure 7 illustrates a friction-fit bundle holder concept (a) obstructing bracket (b) wire twisting effect (c) wire twisting effect detail showing scissors grip effect;
Figure 8 illustrates an adjustable obstructing bracket system, according to one embodiment;
Figure 9 illustrates an obstructing bracket system according to one embodiment;
Figure 10 illustrates SMA or NTE wires comprising butted ends and domes, according to one embodiment;
Figure 11 the addition of an extra butted end at the either end of the wire to improve heat transfer;
Figure 12 illustrates an embodiment using multiple terminals;
Figure 13 illustrates a U-shaped separator for use in a core having a plurality of SMA or NTE elements;
Figure 14 illustrates a plurality of SMA or NTE elements coated with a plastic or resin material;
Figure 15 illustrates how a clamp can be placed around an optimum number of SMA wires and tightened using a screw until the wires are fixed together in a friction lock;
Figure 16 illustrates a tapered press fit unit, pressed from the top downwards, which can be used to create large friction forces between the wires;
Figure 17 illustrates smaller sub-units consisting of taper threaded locks or press fit locks, or standard plumbing compression fittings can be placed on a single cast bundle holder;
Figure 18 illustrates a multi-layered unit consisting of taper cones with SMA wires in between the layers;
Figure 19 illustrates a swaged friction fit embodiment;
Figure 20 illustrates a friction fit embodiment;
Figure 21 illustrates a multiple wire row friction fit embodiment similar to Figure 19 and 20; and
Figures 22 to 24 illustrate an alternative embodiment showing a hollow core to allow fluid flow through the core in use.

### Detailed Description of the Drawings

The invention relates to a heat recovery system under development which can use either Shape Memory Alloys (SMA) or Negative Thermal Expansion materials (NTE) to generate power from low grade heat.

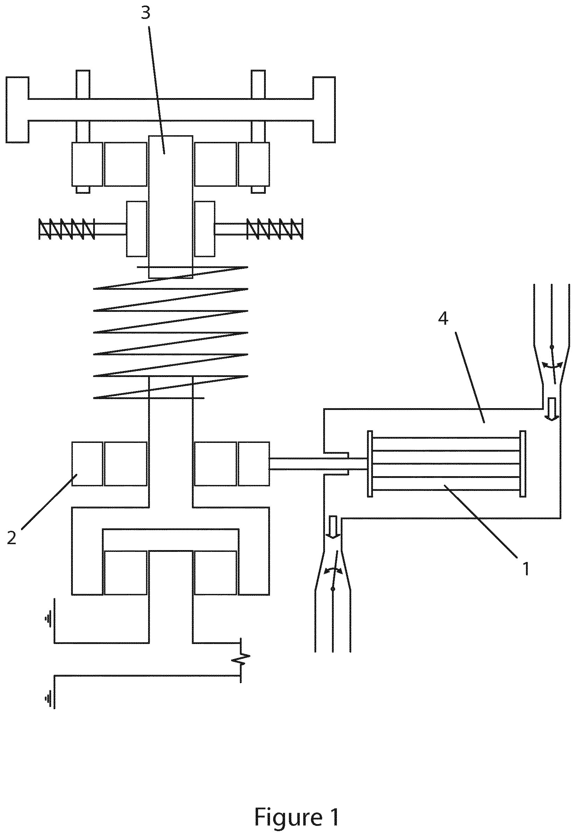

An exemplary known embodiment of an energy recovery device will now be described with reference to Figure 1 which provides an energy recovery device employing a SMA engine indicated by reference numeral 1. The SMA engine 1 comprises an SMA actuation core. The SMA actuation core is comprised of SMA material clamped or otherwise secured at a first point which is fixed. At the opposing end, the SMA material is clamped or otherwise secured to a drive mechanism 2. Thus whilst the first point is anchored the second point is free to move albeit pulling the drive mechanism 3. An immersion chamber 4 is adapted for housing the SMA engine and is also adapted to be sequentially filled with fluid to allow heating and/or cooling of the SMA engine. Accordingly, as heat is applied to the SMA core it is free to contract. Suitably, the SMA core comprises a plurality of parallel wires, ribbons or sheets of SMA material. Typically, a deflection in and around 4% is common for such a core. Accordingly, when a 1m length of SMA material is employed, one might expect a linear movement of approximately 4cm to be available. Higher displacement can also be obtained. It will be appreciated that the force that is provided depends on the mass of wire used. Such an energy recovery device is described in PCT Patent Publication number WO2013/087490, assigned to the assignee of the present invention.

For such an application, the contraction of such material on exposure to a heat source is captured and converted to usable mechanical work. A useful material for the working element of such an engine has been proven to be NickelTitanium alloy (NiTi). The SMA actuation core is comprised of a plurality of SMA material clamped or otherwise secured at a first point which is fixed

In order to secure the NiTi wires in the engine, it is required to develop a system that can anchor each wire at both ends, in such a fashion as will allow it to operate under high load. This system has been designated as the "bundle holder". The bundle holder should overcome two specific problems:
1) Transmit the high-force, low displacement load of the NiTi wires during operation. This is a single degree of freedom (DOF) system whereby one end of the bundle is secured and remains stationary, whilst the opposing end is free to move in one axis of displacement to enable the movement of the piston and the harnessing of the work.
2) Enable the close-packing of the wires, insofar as possible, to enable maximum heat transfer from the transiting water to the wire and vice versa.
3) From a manufacturing point of view, it has to eliminate the tedious and strenuous process of placing hundreds of these NiTi wires in some sort of support and reduce production time and costs.

Such a core is described in UK patent application number 1409679.6, assigned to Exergyn, and is incorporated fully herein by reference. In this application a core engine is described for use in an energy recovery device comprising a plurality of Shape Memory Alloys (SMA) or Negative Thermal Expansion (NTE) elements fixed at a first end and connected at a second end to a drive mechanism. The holder is a holder configured with a plurality of slots adapted to receive the plurality of Shape Memory Alloys (SMA) or NTE elements, for example Nickel Titanium wires. The SMA wires are substantially elongated and arranged in a parallel orientation to make up a core that is housed in a chamber.

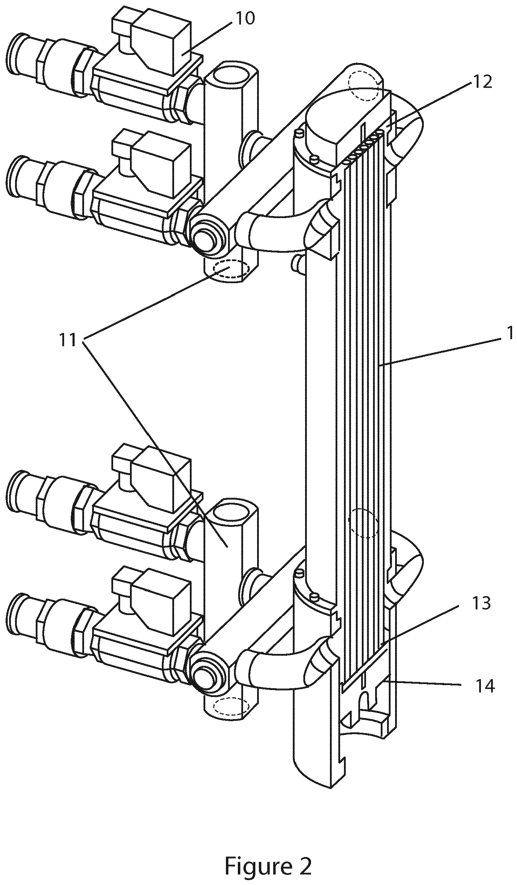

Figure 2 illustrates an embodiment of a core in operation with a plurality of SMA or NTE wires 1 arranged in parallel in use in an energy recovery device. The core is housed in a chamber and is connected to a fluid source via valves 10 and manifolds 11. The SMA wires are secured at both ends by a bottom and top bundle holder 12 and 13. One end of the core is in communication with a piston 14 that is moveable in response to expansion and contraction of the SMA wires to generate energy. The invention as described improves the heat transfer from the fluid to each wire element in the working core to ensure the engine works as efficiently as possible.

### First Embodiment

In one embodiment there is provided an arrangement of the SMA wires 1 are in straight lines, allowing for a more compact arrangement while guaranteeing equal exposure to the fluid.

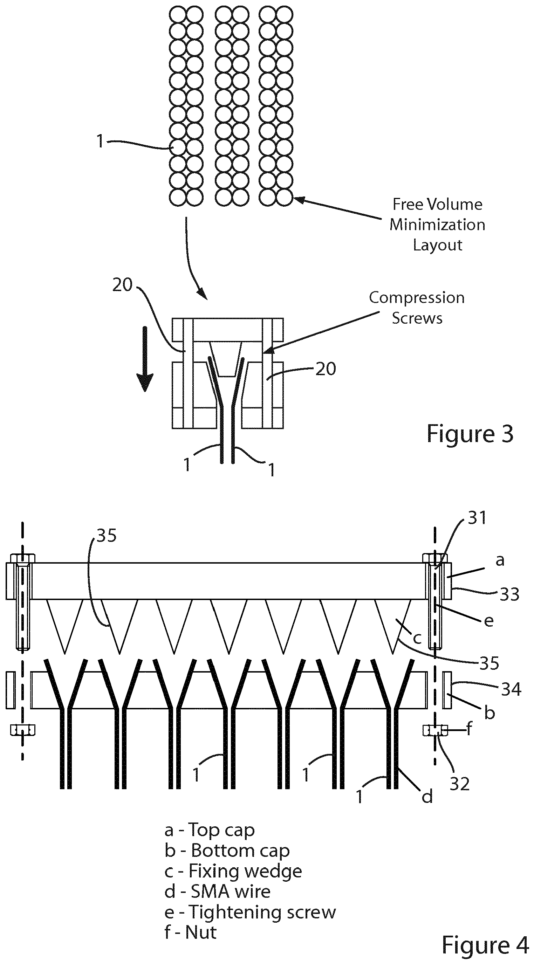

As shown in Figure 3 the top unit is pressed into position, compressing the SMA wires 1 into a friction lock. Compression screws 20 are employed to hold the units together when in their locked state. The top and mid layers can be moulded or cast as the shapes are more basic than conical approaches and they are non-load bearing. The bottom unit acts as the anti-bending bundle support and must be cast from a high tensile material.

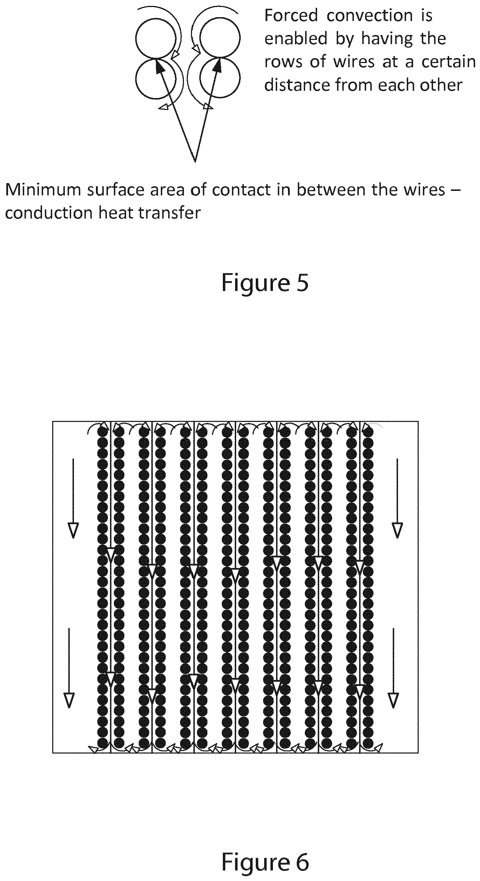

Figure 4 is a similar embodiment to Figure 3, in which the splitting element, namely the fixing wedge, is of different shape. This embodiment solves the problem of swaging wires individually. The wire elements 1 are held using a tightening screw 31 and nut 32in between the top and bottom cap 33, 34 to fix the wire elements 1 into place. Coupling two rows of wires might delay the heat transfer or make it unequal so, in order to stop the two rows of wires from touching a fixing wedge 35 can be made longer and in this way will split the rows, i.e. enhancing heat transfer and acting as a turbulators in the core, as shown in Figure 5 and 6. Figure 5 illustrates a snapshot of the fluid circulation in between wedged wires. Figure 6 illustrates flow paths in between the rows of SMA wire elements.

### Second Embodiment

The friction fit bundle holders described previously can give rise to the active wire elements being too close together, thus creating a limit to effective fluid interaction and consequently ineffective heat transfer. A means of separating the wires is required.

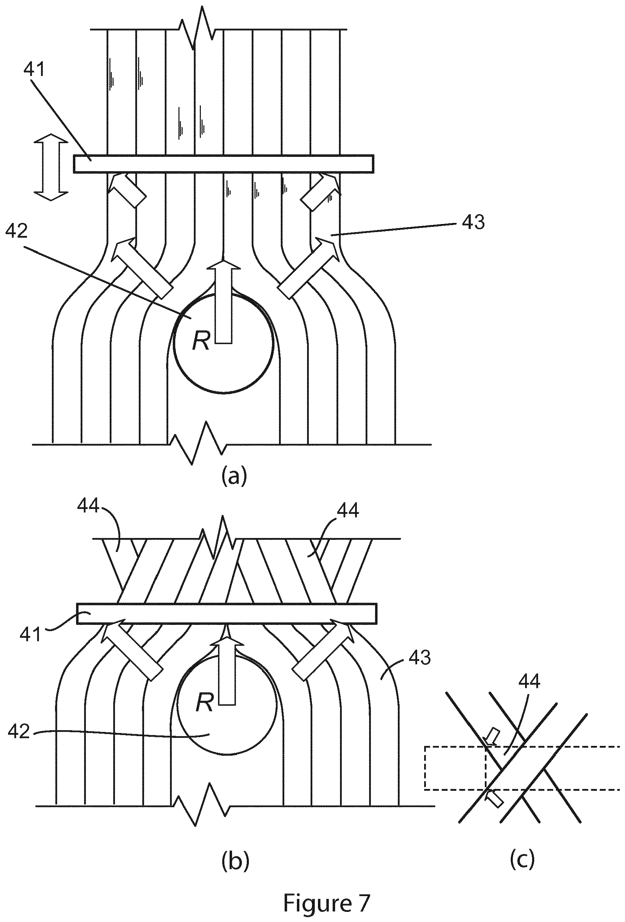

Figure 7 illustrates a number friction-fit bundle holder concepts, where Figure 7a shows an obstructing bracket; Figure 7b illustrates wire twisting effect and Figure 7c illustrates wire twisting effect in more detail showing a scissors grip effect.

Figure 7a illustrates a radius of curvature is introduced in the wires 1 within the bundle below a bundle holder bracket 41 through the use of a strut or other member 42 positioned. The wires and bundle holder are arranged in such way as to allow an outward pressure to be created at the boundary of the wires 1 with the bracket 41. This pressure is created by the resultant force created by the wedging of the strut element 42 into place. This pressure is in addition to that which is exerted through the use of the basic friction fit as previously described.

The wires and the strut 42 are arranged in such way as to provide a resultant force, R, on the bundled wires 43 i.e. the strut is compressed or otherwise forced into the bundle such that there is a net force system acting in the directions denoted in Figure 7. A further advantage is also created. By wedging the wires in this manner, a moderate twisting of the wires in the bundle is created, brought about in large part because of the stiffness of the wire elements (i.e. it is more prominent in larger diameter wires). This twisting gives rise to a type of articulated joint effect 44 (i.e. a "scissors" joint effect) which enables a stronger grip to be exerted due to the exertion of the force at both the top and bottom edge of the bundle holder bracket 41. This can be seen in Figure 7b and Figure 7c.

In this instance, the bundle holder is left free-floating and unsecured to the core wall. Instead, the core is affixed using the strut. The free-floating nature of the bundle means that, during the tensioning stage of the wire operation, when it is pulling on the piston at the opposing end, the bundled wire has the tendency to pull the bundle holder towards the strut, in essence creating a self-reinforcing, "wedged" friction bond between the wire bundle and the strut. In so doing, volume reductions in the wire bundle brought about through the heating of the wire elements are effectively counteracted through the gripping motion enacted by the interaction of the strut, the wires and the bundle holder.

### Third Embodiment

A means of separating the wires into multiple groups in the friction fit bundle holder is required.

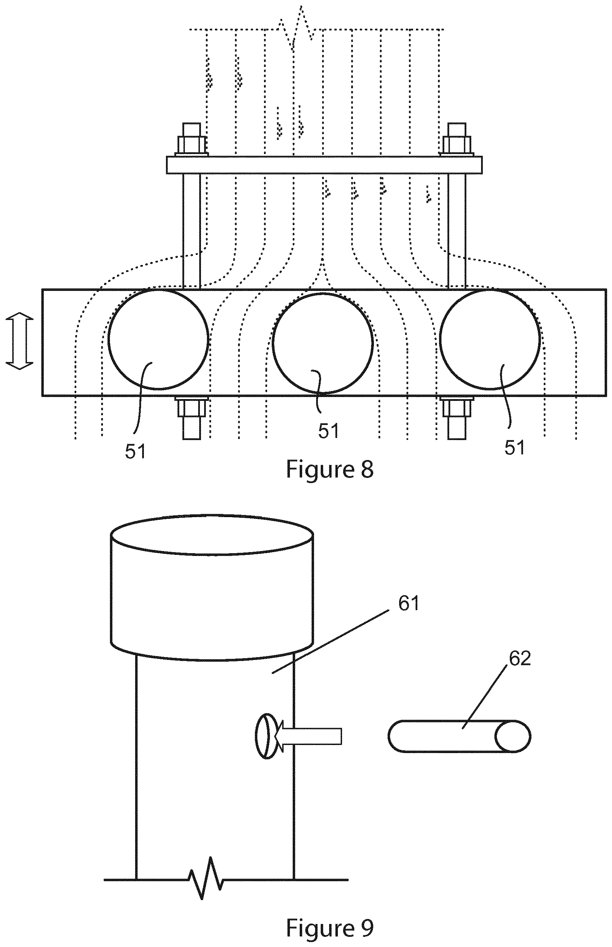

Figure 8 illustrates an adjustable multiple obstructing bracket system, according to one embodiment. In this instance, a plurality of struts 51 is used in a fashion similar to that presented in the previous embodiment. However, in this instance, in addition to creating a stronger frictional bond between the wires and the bundle holder, the additional struts enable the spacing of the wires in such fashion as allows a maximising of heat transfer surface area to be exposed to the transiting fluid flowing over the bundle.

Figure 9 illustrates how the strut might be assembled in the core. The core walls 61 have a hole or opening through which the strut element 62 may be slotted into the core 61. By inserting the strut 62 through the core walls, it is possible for the bundle holder to be inserted into the core first. This has advantages from an assembly management viewpoint. Because the bundle holder is free-floating, the strut 62 can be added afterwards without difficulty.

### Fourth Embodiment

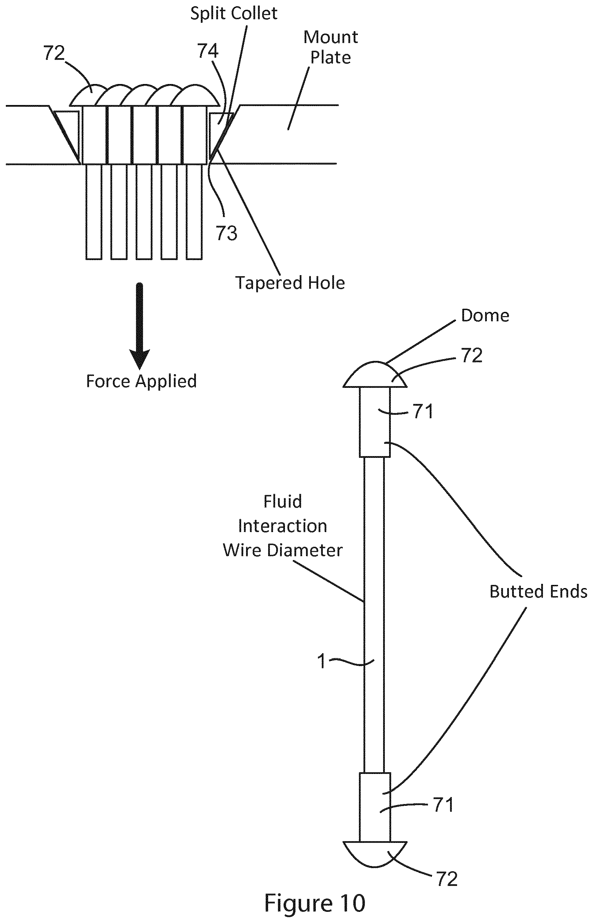

In one embodiment the SMA or NTE wires 1 can comprise butted ends 71 and domes 72, as illustrated in Figure 10. The butted ends act to maintain a centre to centre gap between the SMA wires, while the domes act to restrict wire pull through, when wires are placed tightly into a tapered opening or hole 73 and split collet 74 arrangement.

When a force is applied to the wires in the bundle, the split collet and taper compact the butted ends together. The diameter of the butted ends is selected to ensure the optimum centre to centre distance between wires.

The length of wire interacting with the fluid flow is drawn or rolled to a smaller diameter, hence a gap between the wires is introduced to facilitate fluid flow. The reduced diameter can be optimised to allow for the optimum heat transfer between the fluid and SMA wires.

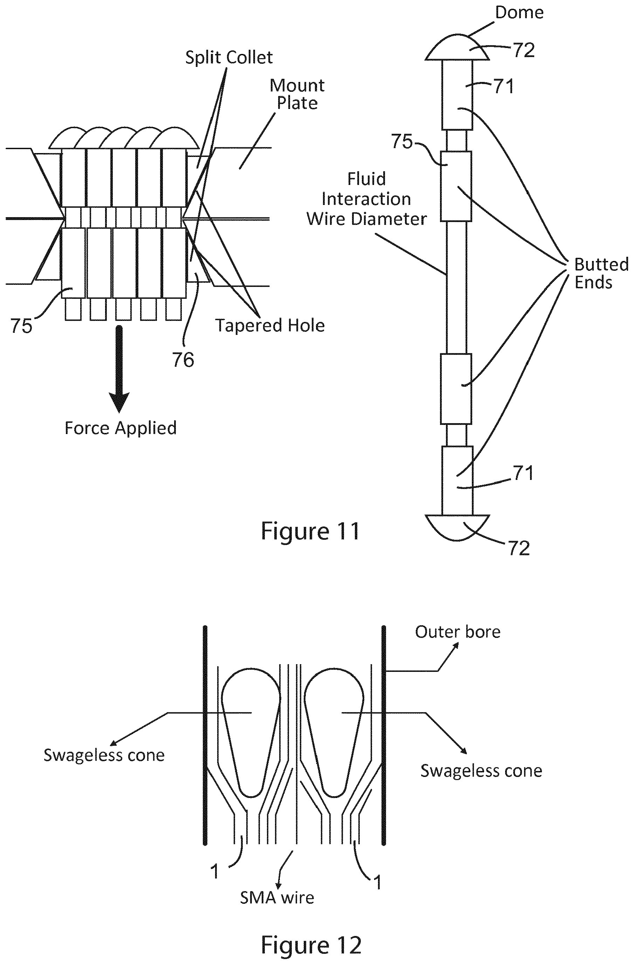

Figure 11 the addition of an extra butted end 75 at the either end of the wire to ensure that the best heat transfer regime will be met. To better accommodate the second butted end 76, the design of the collet can be changed by adding an extra butted end on the lower side of the collet the heat transfer would be optimal and the flow paths would be kept in place after fixing the split collet in the tapered mount plate in a pressed fit.

### Fifth Embodiment

In one embodiment a swageless terminal is provided. It uses the terminal as a holder of the wires within the bundle.

Figure 12 outlines using multiples of these terminals. The reasoning behind this being that if one terminal can create a large reaction force due to axial tension then more than one could create larger reactions forces, meaning that the efficiency can be increased.

### Sixth Embodiment

The problem aimed to be solved by this embodiment is how to separate the wires in a compression type bundle holder in such a way to allow each wire to be sufficiently heated and cooled by the fluid being passed through each core.

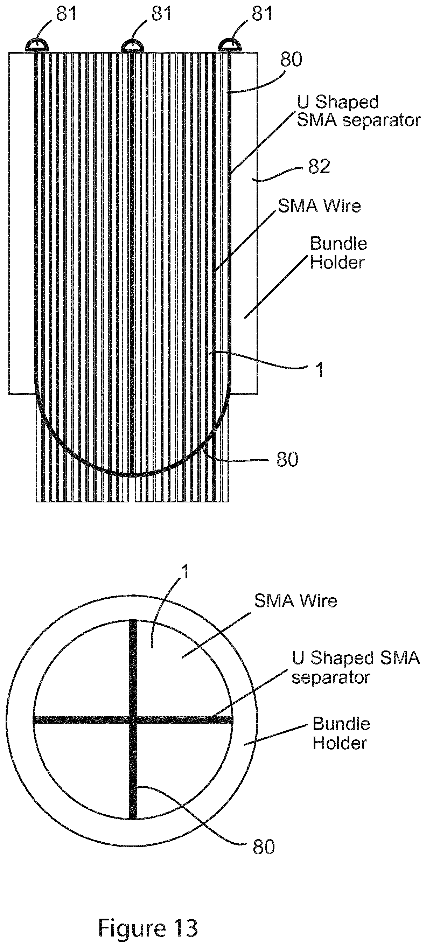

A 'U' shaped SMA separator 80 shown in Figure 13 makes a gap in the bundle allowing fluid to pass through it and more effectively heat and cool the wires. It is held in place in the same manner as the rest of the wires, by means of a dome swage 81 which is described above.

The U shaped wires 80 could also be shape set in this U form so they would contract when heated, this in turn would pull the bottom of the U toward the top of the bundle holder 82 inducing more force on the wire against the bundle holder preventing any slippage.

### Seventh Embodiment

The problem aimed to be solved by this concept is how to separate the wires in a compression type bundle holder in such a way to allow each wire to be sufficiently heated and cooled by the fluid being passed through each core.

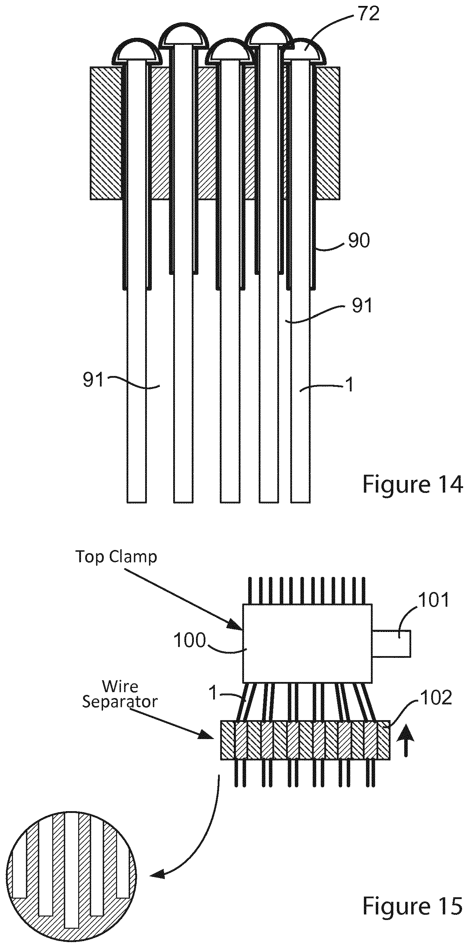

In one embodiment the SMA or NTE wires 1 are dipped in a plastic or resin 90, as shown in Figure 14. The thin coating of this plastic or resin 90 adheres to the surface of the SMA wire, as this coating is only applied to the top and bottom of the wires 1 such that a gap 91 remains between them down their entire length. Figure 14 illustrates a plurality of SMA or NTE elements coated with a plastic or resin material.

### Eight Embodiment

The problems arising with large bundles of wires using traditional hole and swage techniques are the cost and time involved with drilling multiple holes - from a mass production POV this is not ideal and the time needed to swage and assemble each wire in-situ in the bundle holders.

Figure 15 illustrates how a clamp 100 can be placed around an optimum number of SMA wires 1 and tightened using a screw tightener 101 until the wires are fixed together in a friction lock. A wire separator 102 consisting of a number of slots is then placed under the clamp 100 and slid upwards in order to separate the wires 1 to allow for maximum heat transfer as the fluid passes over them. This approach eliminates the need for multiple openings and swages, and allows for much more rapid assembly of the bundle. Furthermore, since the load is taken by the top clamp 100, the wire separator 102 can be cast or moulded, reducing manufacturing time.

### Ninth Embodiment

It may not be possible to achieve a compressive load large enough using a screw tightener in the case of using a clamp around an optimum number of wires. This results in smaller maximum bundle sizes or else larger screws - both of which are undesirable. Furthermore, the screw fit protruding from the sides of the clamp means the design is not suitable for placement in a piston.

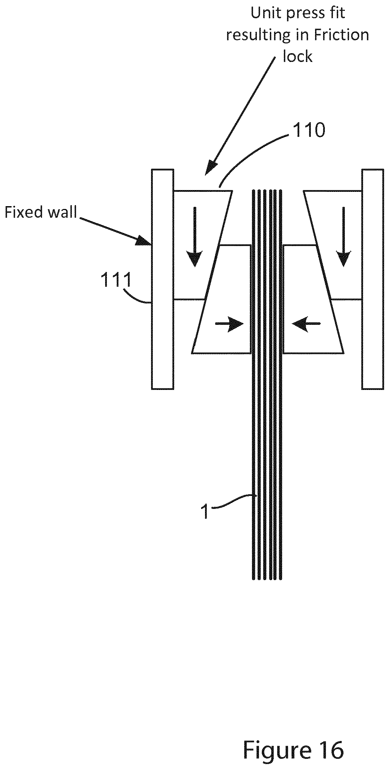

Figure 16 illustrates a tapered press fit unit 110 pressed from the top downwards, can be used to create large friction forces between the wires 1. A fixed wall 111 is necessary to absorb the reaction forces as the load is applied. The advantage of this approach is the flexibility afforded in the design to optimise friction surface area for specific bundle sizes. A wire separator may be necessary split the wires for optimised heat transfer. Multiple inline press fit clamps can be used to facilitate rows or circles of SMA wire. The exterior of the fixed wall can be threaded to facilitate insertion into a piston if required.

### Tenth Embodiment

If the maximum bundle size as a result of press fitting is limited to a bundle size that is below the required wire quantity for a particular core, a strategy to utilized multiple multi-wire connections in a single core is required

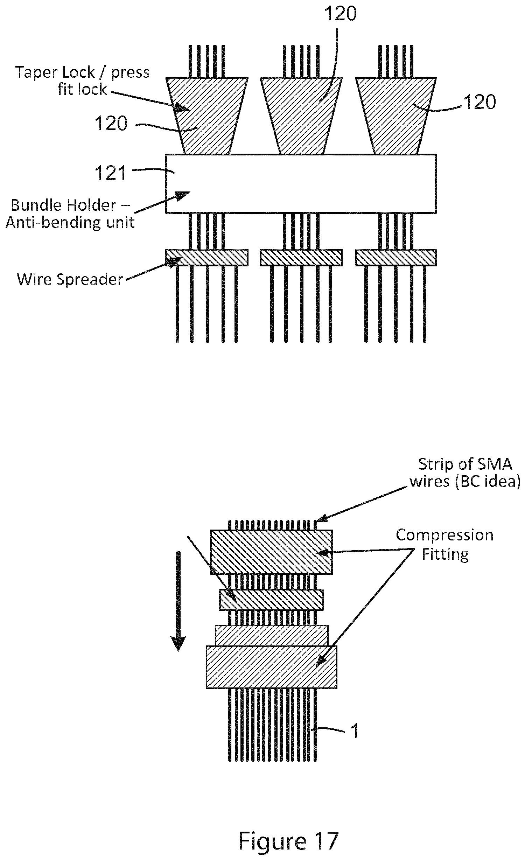

Figure 17 illustrates smaller sub-units consisting of taper threaded locks 120 or press fit locks, or standard plumbing compression fittings can be placed on a single cast bundle holder, complete with individual wire separator for each subunit. Each lock 120 is required to be pressed or locked individually and then slid into a slotted bundle holder 121. Strategic use of wire separators can be used to ensure equal exposure of each wire to the fluid.

### Eleventh Embodiment

The requirement for multiple locks in a single core can increase the time for assembly, while also increasing cost and complexity of the assembly tooling. A single locking movement can increase assembly efficiency while allowing for a more straight forward volumetric reduction via the reduction of area necessary to mount multiple locking units side by side.

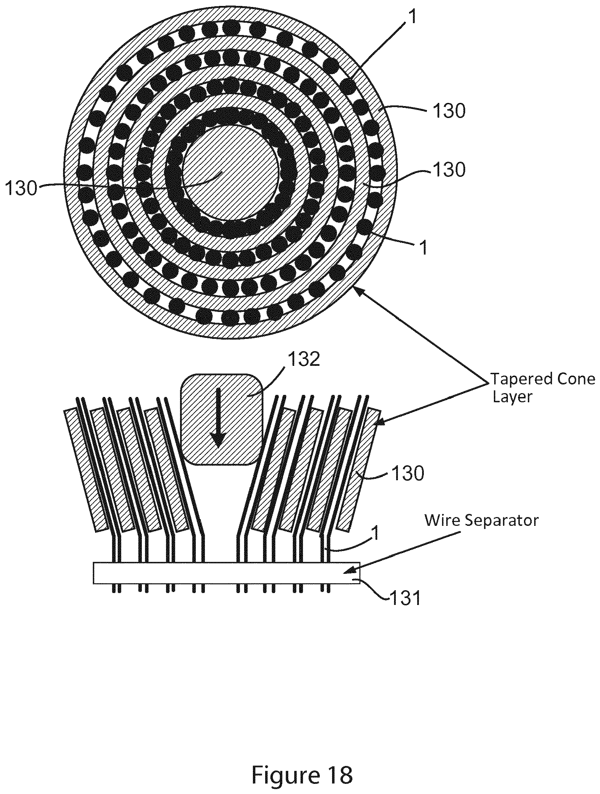

Figure 18 illustrates a multi-layered unit consisting of taper cones 130 with SMA wires 1 in between the layers. A central tapered block 132 is press fitted into position causing the layers to compress together tightly, thereby locking the SMA wires in a friction lock.

This method is advantageous as the central tapered block 132 can be press fit at high force to ensure all SMA wires are gripped tightly. The block can then be secured in place using a screw cap, thus maintaining the friction lock.

### Twelfth Embodiment

After the doming process (swaging of the wire ends in the shape of a dome 72) is automated being able to place them into a bundle holder with both ends of the wire already domed so as to avoid needing to dome one end while the wire is already in the bundle holder is required.

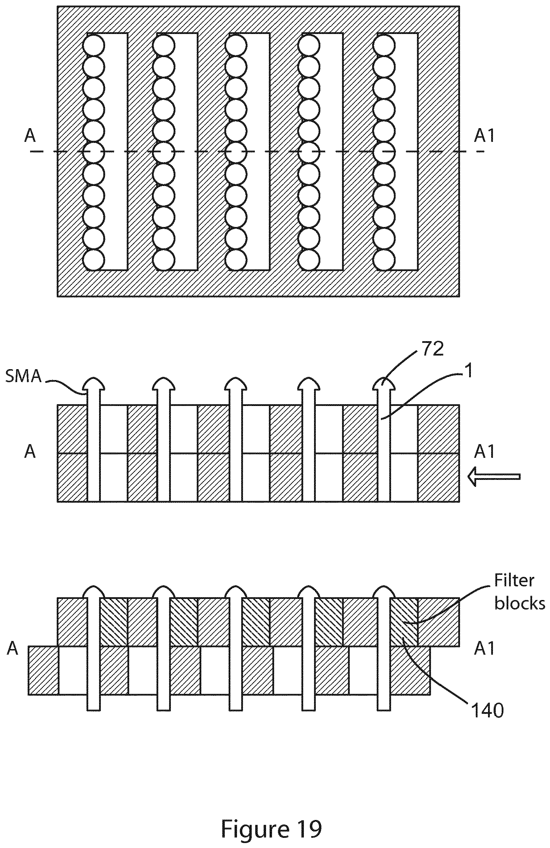

To create a bundle holder that is made up of three main parts, a top and a bottom which shall be the same size and able to slide over each other and a filler block. The top and bottom parts will have slots large enough to fit the wires dome 72 through. Once all the domed wires 1 are placed through the slots the bottom part will be slid over until it hits the side of the wire. The top will then be filled with a block of metal 140 so the dome 72 is supported on two sides. This metal filler block 140 will be held up by the bottom part. This operation is shown in Figure 19.

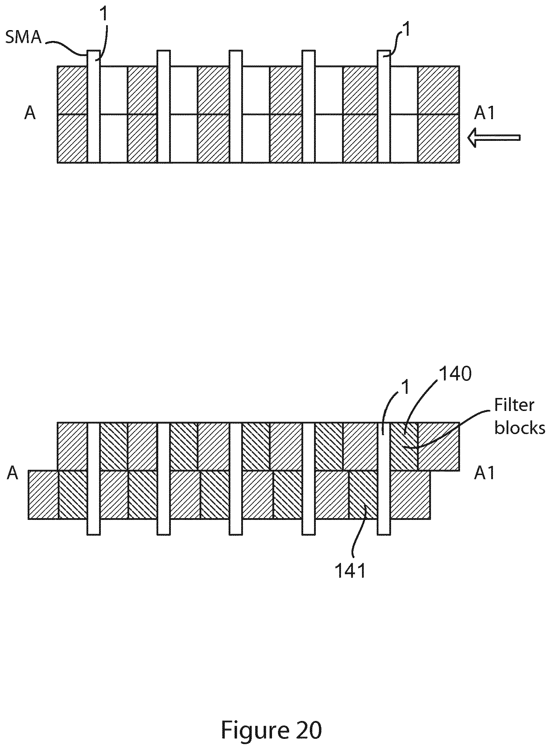

It should be understood that this embodiment is not exclusively applicable to swaged wires, and may be used on swageless wires, where the bottom component is capable of producing enough of a friction force between the SMA wires and the holder wall so as to provide adequate securement of said wire bundle. This embodiment is illustrated in Figure 20, whereby an additional set of filler blocks 140, 141 are utilised in order to provide as tight a fit for the wires as possible.

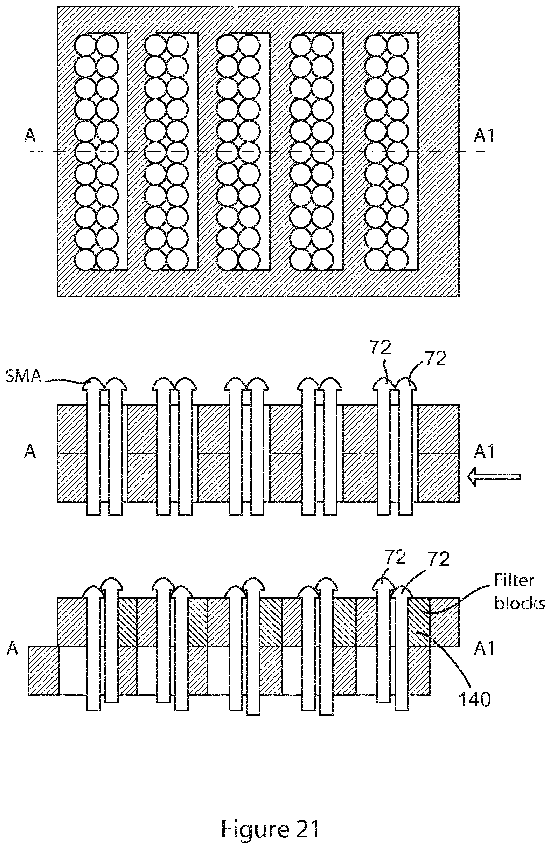

In addition to this consideration, the bundle holder concept disclosed in the present invention may also be used to secure pluralities of wire rows (either swaged or swageless) between the top and bottom parts of the assembly, as opposed to a single row as is shown in Figure 21.

### Thirteenth Embodiment

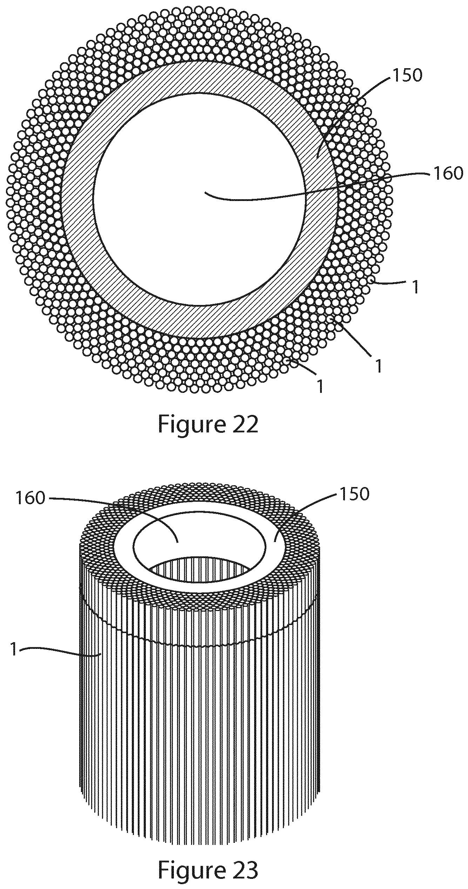

Figures 22 to 24 illustrates another embodiment to increase the heat transfer from the fluid to the wire elements and vice versa. Uneven heating of wires in the core such as that described results in stresses within the wires that shorten their fatigue life.

Figures 22 and 23 show an embodiment that allows for a more evenly distributed flow of liquid to the wires in each core, thereby enhancing even heating of the wires to overcome such difficulties. Figure 22 and 23 shows a 'Hollow Bundle' core configured as a 'donut' or ring of material 150 that has wires 1 arranged around the outside. In effect the core is made of a plurality of elongated wire elements 1 with a hollow centre 150. An opening in the middle 160 of the 'donut'/ ring 150 enables fluid to be flowed through the centre of all the wires thereby greatly enhancing dispersion of fluid when compared to fluid being fed from two opposing sides as previously used.

The invention also overcomes the effects of a double-opposing entry whereby some wires are heated before others causing potential weaknesses and failure points in the wires.

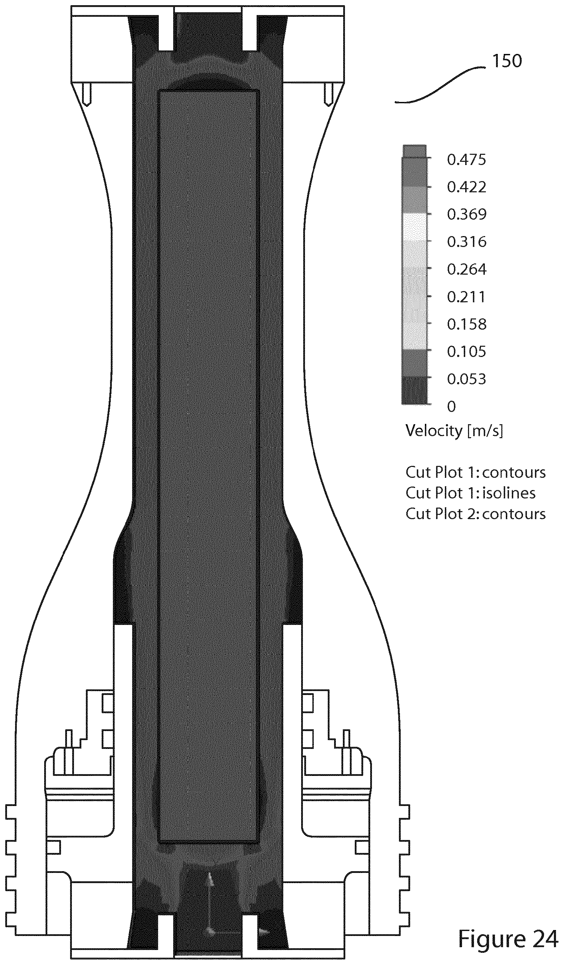

Figure 24 shows the flow of liquid through the core, highlighting the overall even distribution of such liquid. The ring or donut 150 also has a function of securing the wires arranged around it in place.

In the specification the terms "comprise, comprises, comprised and comprising" or any variation thereof and the terms include, includes, included and including" or any variation thereof are considered to be totally interchangeable and they should all be afforded the widest possible interpretation and vice versa.

## Claims

1. An energy recovery device comprising:
an engine comprising a plurality of elongated Shape Memory Alloy (SMA) elements fixed at a first end by a holder element and connected at a second end to a drive mechanism wherein the plurality of Shape Memory Alloy (SMAs) elements are (43) arranged as a plurality of wires positioned substantially parallel with each other to define a core, and the Shape Memory Alloy (SMA) elements (43) are positioned to form a gap between adjacent elements by positioning at least one spacer element (42) to urge the wires away from each other wire **characterized in that** the outer perimeter of wires is secured utilising a bracket (41) to provide an improved heat transfer from a fluid to each element in the core.

2. The energy recovery device of claim 1 wherein the gap forms a hollow engine core dimensioned to allow fluid flow through the centre of the engine in operation.

3. The energy receovery device of any preceding claim wherein the at least one spacer element (42) is adapted to secure the wires around the core and keep the wires in place.

4. The energy recovery device of any preceding claim wherein the bracket (41) is configured to maximise the heat transfer surface area of the elements when a fluid is flowing over the elements.

5. The energy recovery device of any preceding claim wherein the diameter (71, 75) of at least one SMA element is reduced relative to either or both ends to optimise heat transfer between the fluid and element.

6. The energy recovery device of any preceding claim comprisng a U-shaped separator (80).

7. The energy recovery device of any preceding claim wherein at least one or more of the SMA element ends are coated with a resin or plastic (90) to maintain a gap (91) towards each center.

8. The energy recovery device of any preceding claim wherein the holder element comprises a tapered lock mechanism (120) in the shape of a cone adapted to friction lock the elements at one end.

## Patentansprüche

1. Energierückgewinnungsvorrichtung, die Folgendes umfasst:
eine Kraftmaschine, die eine Vielzahl von langgestreckten Elementen aus Formgedächtnislegierung (SMA) umfasst, die an einem ersten Ende von einem Halterelement eingespannt und an einem zweiten Ende mit einem Antriebsmechanismus verbunden sind, wobei die Vielzahl von Elementen aus Formgedächtnislegierung (SMA) (43) als eine Vielzahl von Drähten angeordnet sind, die im Wesentlichen parallel zueinander positioniert sind, um einen Kern zu definieren, und die Elemente aus Formgedächtnislegierung (SMA) (43) positioniert sind, um einen Spalt zwischen benachbarten Elementen zu bilden, indem wenigstens ein Abstandhalterelement (42) positioniert wird, um die Drähte von jedem anderen Draht wegzudrängen, **dadurch gekennzeichnet, dass** der äußere Umfang von Drähten unter Nutzung einer Klammer (41) befestigt ist, um eine bessere Wärmeübertragung von einem Fluid auf jedes Element in dem Kern zu ergeben.

2. Energierückgewinnungsvorrichtung nach Anspruch 1, wobei der Spalt einen hohlen Kraftmaschinenkern bildet, der so dimensioniert ist, dass im Betrieb Fluid durch die Mitte der Kraftmaschine strömen kann.

3. Energierückgewinnungsvorrichtung nach einem der vorangehenden Ansprüche, wobei das wenigstens eine Abstandhalterelement (42) dazu angepasst ist, die Drähte um den Kern zu befestigen und die Drähte in Position zu halten.

4. Energierückgewinnungsvorrichtung nach einem der vorangehenden Ansprüche, wobei die Klammer (41) konfiguriert ist, um beim Strömen eines Fluids über die Elemente die Wärmeübertragungsoberfläche der Elemente zu maximieren.

5. Energierückgewinnungsvorrichtung nach einem der vorangehenden Ansprüche, wobei der Durchmesser (71, 75) von wenigstens einem SMA-Element relativ zu einem der Enden oder beiden reduziert ist, um die Wärmeübertragung zwischen dem Fluid und dem Element zu optimieren.

6. Energierückgewinnungsvorrichtung nach einem der vorangehenden Ansprüche, die eine U-förmige Trennvorrichtung (80) umfasst.

7. Energierückgewinnungsvorrichtung nach einem der vorangehenden Ansprüche, wobei wenigstens ein oder mehr der Enden der SMA-Elemente mit einem Kunstharz oder Plastik (90) beschichtet sind, um einen Abstand (91) zu jeder Mitte hin aufrecht zu erhalten.

8. Energierückgewinnungsvorrichtung nach einem der vorangehenden Ansprüche, wobei das Halterelement einen konischen Sicherungsmechanismus (120) in der Form eines Kegels aufweist, der zum Sichern der Elemente an einem Ende durch Reibschluss angepasst ist.

## Revendications

1. Dispositif de récupération d'énergie comprenant :
un moteur comprenant une pluralité d'éléments d'alliage à mémoire de forme (SMA) fixés au niveau d'une première extrémité par un élément de maintien et raccordés au niveau d'une seconde extrémité à un mécanisme d'entraînement dans lequel la pluralité d'éléments d'alliage à mémoire de forme (SMA) (43) est agencée comme une pluralité de fils positionnés sensiblement parallèles les uns aux autres pour définir un noyau, et les éléments d'alliage à mémoire de mémoire (SMA) (43) sont positionnés pour former un espace entre des éléments adjacents en positionnant au moins un élément d'espacement (42) pour éloigner les fils les uns des autres **caractérisé en ce que** le périmètre externe des fils est sécurisé au moyen d'un support (41) pour fournir un transfert de chaleur amélioré à partir d'un fluide à chaque élément dans le noyau.

2. Dispositif de récupération d'énergie selon la revendication 1 dans lequel l'espace forme un noyau de moteur creux dimensionné pour permettre un écoulement de fluide à travers le centre du moteur en fonctionnement.

3. Dispositif de récupération d'énergie selon l'une quelconque des revendications précédentes dans lequel l'au moins un élément d'espacement (42) est adapté à sécuriser les fils autour du noyau et maintenir les fils en place.

4. Dispositif de récupération d'énergie selon l'une quelconque des revendications précédentes dans lequel le support (41) est configuré pour maximiser la zone de surface de transfert de chaleur des éléments lorsqu'un fluide s'écoule sur les éléments.

5. Dispositif de récupération d'énergie selon l'une quelconque des revendications précédentes dans lequel le diamètre (71, 75) d'au moins un élément de SMA est réduit par rapport à une extrémité ou aux deux extrémités pour optimiser le transfert de chaleur entre le fluide et l'élément.

6. Dispositif de récupération d'énergie selon l'une quelconque des revendications précédentes comprenant un séparateur en forme de U (80).

7. Dispositif de récupération d'énergie selon l'une quelconque des revendications précédentes dans lequel au moins l'une ou plusieurs des extrémités d'élément de SMA est/sont revêtue(s) d'une résine ou de plastique (90) pour maintenir un espace (91) en direction de chaque centre.

8. Dispositif de récupération d'énergie selon l'une quelconque des revendications précédentes dans lequel l'élément de maintien comprend un mécanisme de verrou conique (120) sous la forme d'un cône adapté à verrouiller par friction les éléments au niveau d'une extrémité.
